Europäisches Patentamt

European Patent Office

Office européen des brevets

(11) Publication number: **0 266 162 B1**

(45) Date of publication of patent specification: **10.07.91**  (51) Int. Cl.⁵: **H01M 4/00, H01M 4/62**

(21) Application number: **87309457.7**

(22) Date of filing: **26.10.87**

(54) Hydrogen absorption alloy electrode and hydrogen cell.

(30) Priority: **27.10.86 JP 255143/86**
**27.10.86 JP 255145/86**

(43) Date of publication of application:
**04.05.88 Bulletin 88/18**

(45) Publication of the grant of the patent:
**10.07.91 Bulletin 91/28**

(84) Designated Contracting States:
**DE FR**

(56) References cited:
**FR-A- 2 232 095**
**GB-A- 842 819**
**GB-A- 2 027 979**

**PATENT ABSTRACTS OF JAPAN, vol. 10, no. 313 (E-448)[2369], 24th October 1986; & JP-A-61 124 054 (SANYO ELECTRIC CO. LTD) 11-06-1986**

**PATENT ABSTRACTS OF JAPAN, vol. 4, no. 83 (E-15)[565], 14th June 1980; & JP-A-55 49 866 (HITACHI SEISAKUSHO K.K.) 10-04-80**

**PATENT ABSTRACTS OF JAPAN, vol. 6, no. 238 (E-144)[1116], 26th November 1982; & JP-A-57 138 776 (SANYO DENKI K.K.) 27-08-1982**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Sato, Yuji c/o Patent Division**
**Kabushiki Kaisha Toshiba 1-1 Shibaura**
**1-chome**
**Minato-ku Tokyo 105(JP)**
Inventor: **Mitsuyasu, Kiyoshi c/o Patent Division**
**Kabushiki Kaisha Toshiba 1-1 Shibaura**
**1-chome**
**Minato-ku Tokyo 105(JP)**
Inventor: **Yagasaki, Eriko c/o Patent Division**
**Kabushiki Kaisha Toshiba 1-1 Shibaura**
**1-chome**
**Minato-ku Tokyo 105(JP)**
Inventor: **Kanda, Motoya c/o Patent Division**
**Kabushiki Kaisha Toshiba 1-1 Shibaura**
**1-chome**
**Minato-ku Tokyo 105(JP)**
Inventor: **Tsuruta, Shinji c/o Patent Division**
**Kabushiki Kaisha Toshiba 1-1 Shibaura**
**1-chome**
**Minato-ku Tokyo 105(JP)**

PATENT ABSTRACTS OF JAPAN, vol. 7, no. 8 (E-152)[1153], 13th January 1983; & JP-A-57 165 964 (MATSUSHITA DENKI SANGYO K.K.) 13-10-1982

PATENT ABSTRACTS OF JAPAN, vol. 10, no. 8 (E-373)[2065], 14th January 1986; & JP-A-60 172 166 (MATSUSHITA DENKI SANGYO K.K.) 05-09-1985

Inventor: **Sasaki, Kunihiko c/o Patent Division Kabushiki Kaisha Toshiba 1-1 Shibaura 1-chome Minato-ku Tokyo 105(JP)**

(74) Representative: **Freed, Arthur Woolf et al MARKS & CLERK 57-60 Lincoln's Inn Fields London WC2A 3LS(GB)**

## Description

The present invention relates to a hydrogen absorption alloy electrode and a hydrogen cell using the same as a cathode.

Hydrogen absorption alloys are capable of reversibly absorbing and desorbing a large amount of hydrogen and have been used for separation of hydrogen gas and its storage. Hydrogen absorption alloys can electrochemically absorb hydrogen atoms in an aqueous electrolytic solution. Also, these alloys can oxidize absorbed hydrogen atoms to form water. For these properties, a hydrogen absorption alloy can be used as a cathode material for a cell (mainly a secondary cell).

A hydrogen absorption alloy electrode containing a hydrogen absorption alloy has (1) a higher energy density than that of a conventional cadmium or lead electrode; (2) a smaller ecological influence since it contains no toxic metals; (3) an electrode potential substantially equal to that of a cadmium electrode. Therefore, a nickel-hydrogen cell can be used, without modifications, in equipment using a 1.2 - 1.5 V cell such as a conventional nickel-cadmium cell and a conventional dry cell (i.e., a primary cell such as a manganese cell and an alkali-manganese cell). However, since the hydrogen absorption alloy tends to be gradually converted into fine powder due to distortion in crystal lattices which occurs as the alloy absorbs and desorbs hydrogen, the alloy cannot be used as an electrode without modifications.

Thus, in order to prepare a hydrogen absorption alloy electrode, one of the following procedures has been taken. (1) The hydrogen absorption alloy is amorphitized, (2) the alloy is pulverized and the resultant powder is sintered, or (3) the alloy is pulverized and the resultant powder is molded using a binder. Method (1) aims at preventing distortion of crystal lattices from developing throughout the alloy. However, method (1) degrades the property of the alloy as an intermetallic compound, and an amount of hydrogen absorption undesirably decreases. According to method (2), a change in shape during use can be minimized since the alloy is pulverized beforehand and the pulverization process activates the alloy, good properties can be exhibited from the initial period of use. However, the resultant electrode has no flexibility, poor workability and poor operability. According to method (3), good shape stability and alloy activation can be achieved in the same manner as in method (2). In addition, a flexible electrode can be prepared. It should be noted that an electrode is often heated to a temperature at which the binder can be sintered, after the electrode is formed to increase a binding force.

When a hydrogen absorption alloy electrode is to be formed using a hydrogen absorption alloy as described above, it is advantageous to employ method (3) from the viewpoints of capacity and workability. However, since mutual contact between hydrogen absorption alloy particles in a hydrogen electrode depends on only action of a binder, the mechanical strength of the electrode such as tensile strength is low, and the electrical conductivity of the electrode is not satisfactory. A low electrical conductivity results in a difficulty in quick charging/discharging (charging/discharging with a large current). To increase the electrical conductivity of the hydrogen absorption alloy electrode, the electrode is pressed against a metallic electrical collector, or a metal or carbon powder is mixed in the alloy powder.

Japanese Patent Publication (Kokoku) No. 58-46827 discloses a method of fabricating a porous hydrogen absorption electrode by sintering a mixture of a hydrogen absorption alloy powder and a conductive powder. Japanese Patent Disclosure (Kokai) Nos. 53-103541 and 60-172166 describe methods of fabricating hydrogen absorption alloy electrodes by binding hydrogen absorption alloy powders and conductive powders by polymer binders. In these hydrogen absorption alloy electrodes, nickel powder, nickel flakes (the flakes are described as a material having a plate-like structure having a thickness of less than 1 $\mu$m and an average particle size of 20 $\mu$m or more in Japanese Patent Disclosure No. 60-172166), or acetylene black is used as the conductive powder.

However, when nickel powder or nickel flakes are used as a conductive powder, the content thereof in the electrode is increased in order to ensure required electrical conductivity. The amount of hydrogen absorption alloy powder as an active material is thus correspondingly decreased. Indeed, utilization efficiency can be improved as compared with an electrode which does not contain a conductive powder, but an electrode capacity per unit volume cannot be increased to a desired extent. When carbon powder, e.g., acetylene black, is used as a conductive material, even in a small amount, a sufficiently high electrical conductivity is expected to be obtained since the particles of active materials are considered to be electrically connected to each other by a chain stereostructure of acetylene black. Thus, a relative content decrease of hydrogen absorption alloy powder as in the nickel powder can be prevented. However, as a matter of fact, the chain stereostructure of acetylene black described above can not be maintained in the electrode, since a physical force acts on the mixture of alloy powder and acetylene black during mixing, and the chain stereostructure is undesirably damaged. As a result, electrical conductivity of the electrode cannot be increased to an expected extent.

It is therefore a principal object of the present invention to provide a hydrogen absorption alloy electrode wherein decreases in mechanical strength and electrical conductivity due to powdering property of a hydrogen absorption alloy can be reduced, and a hydrogen cell using the same.

The invention provides a hydrogen absorption electrode comprising:

a hydrogen absorption alloy powder selected from the group comprising a La-Ni alloy, a Ca-Ni alloy, a Ti-Ni alloy, a La-Co alloy, a Ti-Cu alloy, a Ti-Fe alloy and a Ca-Cu alloy; alloys of misch metal with Ni or Co; and related alloys which contain other elements substituting a portion of the elements of the above alloys; particles of which powder are bound by polymeric binder inert in an electrolytic solution; and

a fibrous conductive material contacting with the particles of said hydrogen absorption alloy powder so as to bridge the particles.

A hydrogen cell according to the present invention uses the hydrogen absorption electrode as a cathode.

This invention can be more fully understood from the following detailed description when taken in conjunction with the accompanying drawings, in which:

Fig. 1 is a view for explaining behavior of a fibrous conductive material in a hydrogen absorption alloy electrode according to the present invention;

Fig. 2 is a schematic sectional view showing a hydrogen cell using the hydrogen absorpton alloy electrode of the invention as a cathode;

Fig. 3 is a view for explaining an electrical conductivity of the hydrogen absorption alloy electrode;

Fig. 4 is a plane view showing a sample subjected to a tensile strength measurement for the hydrogen absorption alloy electrode; and

Figs. 5 to 9 are graphs showing properties of the hydrogen absorption alloy electrode according to the present invention.

A hydrogen absorption alloy electrode according to the present invention contains (A) a hydrogen absorption alloy powder, (B) a binder, and (C) a fibrous conductive material. These components of the electrode will be described below one by one.

(A) Hydrogen Absorption Alloy Powder

A hydrogen absorption alloy used in the present invention may be any known alloy which is capable of reversibly absorbing and desorbing hydrogen. Examples are an La-Ni alloy, a Ca-Ni alloy, a Ti-Ni alloy, an La-Co alloy, a Ti-Cu alloy, a Ti-Fe alloy, a Ca-Cu alloy and related alloys which contain other elements substituting a portion of the elements of the above alloys. In these alloys, La may be substituted with misch metal. These hydrogen absorption alloys are used in the form of powder having a particle size of about 0.1 $\mu$m to about 50 $\mu$m. ·

(B) Binder

A binder is used to bind particles of the hydrogen absorption alloy powder. The binder is preferably a polymeric material which is inactive in an electrolytic solution, especially an alkaline solution. Examples of such binder include polytetrafluoroethylene, polyethylene, polyvinyl alcohol, and carboxymethyl cellulose. The polymeric binder can be used in the form of powder. Of these binders, polytetrafluoroethylene can be mixed with electrode components of the present invention in a dry state. When polytetrafluoroethylene is kneaded with the electrode components, it will have a fibrous structure which sticks to particles of the hydrogen absorption alloy powder. Thus, even if the hydrogen absorption alloy is micro-cracked during use, cracked particles are prevented from falling off from the electrode. Polyvinyl alcohol, or carboxymethyl cellulose is suspended in water to prepare a paste and is mixed with the electrode components of the present invention. Polytetrafluoroethylene may also be mixed with this paste. Further polytetrafluoroethylene may be coated on the surface of the electrode made of the paste.

The binder can be used in an amount of 0.5 to 10 % by weight with respect to the total weight of the electrode composition.

(C) Fibrous Conductive Material

A fibrous conductive material used in the present invention is a conductive material having a length 10 times or more of its diameter. The fibrous conductive material includes a metal fiber and a carbon fiber.

Metal fibers may be formed of a single metal or an alloy. The same or different kinds of metal fibers may be used. Since the metal fiber is used as one component of the hydrogen absorption alloy electrode, it

4

is required to be stable in an electrolytic solution. As the electrode is usually used in an alkaline solution, the metal fiber is required to have a corrosion resistance to that solution.

It is desired that the fibrous metal contain at least one kind of element which is contained in the hydrogen absorption alloy used. In such a case, even if the constitutional element of the metal fiber may elute into an electrolytic solution, the poisoning of the cathode or anode by the eluted element can be prevented.

Metal fibers meeting the above requirements are shown below when they are made of single metals. A nickel fiber is preferably selected when an La-Ni, Ca-Ni, or Ti-Ni hydrogen absorption alloy is used. A cobalt fiber is preferably selected when an La-Co or Ti-Co hydrogen absorption alloy is used. A copper fiber is preferably selected when a Ti-Cu or Ca-Cu hydrogen absorption alloy is used. If only corrosion resistance of the metal fiber is taken into consideration, it is possible to select the metal fibers in combination with other hydrogen absorption alloys. In this case, it is possible to use fibers of a noble metal such as platinum, gold, silver, and palladium. Of various metals, the best combination for a hydrogen absorption alloy electrode is a combination of a hydrogen absorption alloy containing Ni with a fiber of nickel or a nickel alloy.

The shape of the metal fiber varies depending on hardness of a metal for forming the metal fiber, a shape of a hydrogen absorption alloy electrode, and the like. It is required that the metal fiber does not interfere with kneading, mixing, rolling or molding, that the prepared electrode has appropriate flexibility, and that tips of the metal fibers do not protrude like whiskers on the surface of the electrode. For example, in order to prepare a hydrogen absorption alloy electrode having a thickness of 0.5 mm and an area of about 5 cm x 10 cm, if metal fibers having a length of several mm or more, the diameter of the fiber must be 100 $\mu$m or less. If the diameter exceeds 100 $\mu$m, a tensile force of the metal fibers is excessively large to degrade workability. If metal fibers have a length of several cm to several tens of cm although its diameter is smaller than 100 $\mu$m, operation such as kneading is actually difficult. It is preferable to set a minimum value of the metal fiber length to be larger than the average particle size of the hydrogen absorption alloy powder (normally about 0.1 to 50 $\mu$m). When the metal fiber length is smaller than the minimum value, the metal fibers can be filled in the gaps between the particles of the hydrogen absorption alloy powder to increase the electrical conductance. However, an increase in mechanical strength, which is achieved upon mixing of metal fibers, cannot be expected. The diameter of the metal fiber preferably falls within the range of 2 or 3 $\mu$m to 50 or 60 $\mu$m and its length preferably falls within the range of 200 or 300 $\mu$m to 5 or 6 cm. The metal fibers may be twisted to prepare a strand.

The content of the metal fiber is preferably 0.5 to 10 % by weight with respect to the total weight of the hydrogen absorption alloy electrode composition.

Since the carbon fiber is not eluted in an electrolytic solution and is kept stable, the requirements to be satisfied by the metal fiber need not be considered. The carbon fiber preferably has a diameter of 20 $\mu$m or less and a length falling within the range of 1.0 to 30 mm. If the diameter exceeds 20 $\mu$m, the specific surface area is decreased to degrade the degree of contact with the hydrogen absorption alloy powder, and an effect of increasing the electrical conductivity is reduced. If the length of the carbon fiber is less than 1.0 mm, the fibers are too short to form a three-dimensional chain structure. If the length of the carbon fiber exceeds 30 mm, unifom kneading during formation of an electrode cannot be properly performed. In addition, the carbon fibers tend to be cut during kneading.

The carbon fibers are preferably mixed in an amount of 1.0 to 20.0 % by weight in the electrode. When the content is less than 1.0 %, an increase in electrical conductivity cannot be expected. When the content exceeds 20.0 %, uniform kneading tends to be difficult.

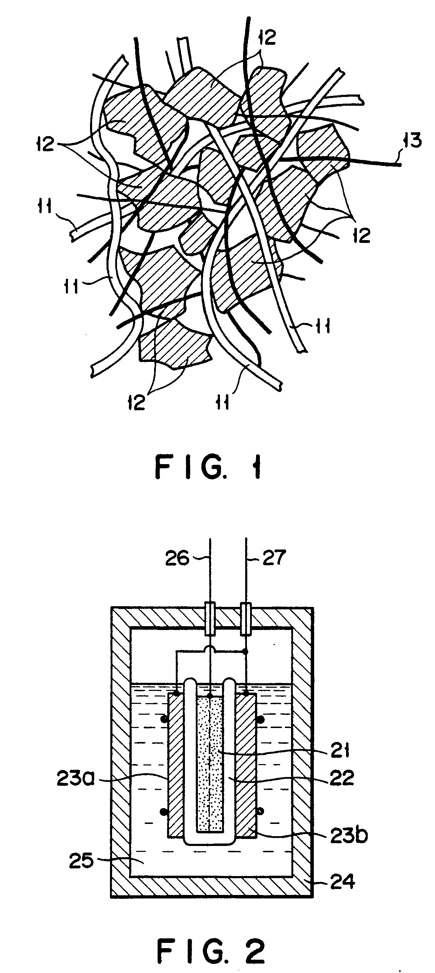

As shown in Fig. 1, fibrous conductive material 11 contacts with hydrogen absorption alloy powder particles 12 bound by fibrous binder 13 to bridge them and is bound also by binder 13. Even if the hydrogen absorption alloy is cracked and powdered during use, the cracked particles are not isolated (i.e, the cracked particles remain bridged by fibrous conductive material 11, thereby ensuring electrical conductivity). Therefore, a three-dimensional chain structure can be obtained.

Thus, contact points between the conductive fibers and between the conductive fibers and the hydrogen absorption alloy powder are increased in number, and a hydrogen absorption alloy electrode having a low impedance and hence a high electrical conductivity can be obtained. Sticking of the conductive fibers with the hydrogen absorption alloy powder and an increase in friction resistance at the contact points, and a binding force of the binder for the conductive fibers cause an increase in resistance against deformation during repeated charging/discharging, thereby obtaining a hydrogen absorption alloy electrode having high mechanical strength.

If a metal fiber strand is used, loops of the strand exhibit a proper frictional force, so that contact/binding between the stranded yarns and between the strand, the hydrogen absorption alloy powder, and the binder can be very stable. Therefore, a hydrogen absorption alloy electrode having a higher mechanical strength can be obtained.

(D) Additional Component

In addition to components (A), (B) and (C), the hydrogen absorption alloy electrode according to the present invention may contain a conductive powder such as a metal powder or a carbon powder (e.g., carbon black powder). The additional conductive powder preferably has an average particle size falling within the range of 0.01 to 0.1 $\mu$m and its content preferably falls within the range up to 2.0 % by weight with respect to the total weight of the electrode composition.

The hydrogen absorption electrode according to the present invention may further contain various catalysts (e.g., Pt, Ag, Pd) in an effective amounts.

In order to prepare a hydrogen absorption alloy electrode according to the present invention, the above components are kneaded and formed by a roll or the like according to a conventional method. The formed sheet is cut into pieces having a proper size. An electrical collector such as a metal net may be embedded in the electrode or applied on the surface of the electrode, thereby further improving the electrical conductivity and mechanical strength of the electrode.

Fig. 2 shows a hydrogen cell model having hydrogen absorption alloy electrode 21 of the invention as a cathode. Two anodes (e.g., sintered nickel electrodes) 23a and 23b are formed on both major surfaces of electrode 21 through corresponding separators 22 electrically separating the anode and the cathode. This electrode assembly is dipped in electrolytic solution (e.g, a potassium hydroxide solution) 25 contained in sealed vessel 24. Lead wire 26 is connected to electrode 21 and lead wire 27 is commonly connected to anodes 23a and 23b. These lead wires 26 and 27 extend outside vessel 24.

In an actual sealed hydrogen cell, the electrolytic solution is used in a minimum necessary amount in order to facilitate gas absorption reaction (reduction reaction of $O_2$ gases generated from the anode into $H_2O$ on the cathode). Thus, the anode, cathode and separator are slightly wetted by the electrolytic solution. The separator is usually formed of non-woven polymeric fabric which can hold the electrolytic solution therein.

The present invention will be described in detail by way of its examples.

Examples 1 - 4

A hydrogen absorption alloy represented by composition formula $LaNi_{4.7}Al_{0.3}$ was put into a pressure-resistant tank and the tank was evacuated at 60°C and a pressure of $10^{-3}$ torr or less for an hour. Immediately thereafter, the tank was cooled to 10°C and hydrogen of 30 kg/cm$^2$ was supplied thereto. The tank was kept in this state for about 2 hours. The hydrogen gas was discharged from the tank. The tank was evacuated for 3 hours while it was heated again to 90°C. The hydrogen absorption alloy pulverized during the above activation treatment. The resultant alloy powder was filtered by a 200 mesh sieve (an opening size: 74 $\mu$m).

The hydrogen absorption alloy powder passed through the 200 mesh sieve, nickel fibers having a diameter of about 10 $\mu$m and a length of about 10 mm, and a polytetrafluoroethylene (PTFE) powder were mixed at a ratio shown in Table 1 and were kneaded. Four hydrogen absorption alloy electrode sheets having a thickness of 0.5 mm were prepared by using a roller.

Comparative Example 1

A mixture of 96.0 % by weight of a hydrogen absorption alloy powder passed through a 200 mesh sieve as in Example 1 and 4 % by weight of a polytetrafluoroethylene powder was kneaded, and a 0.5-mm thick hydrogen absorption alloy electrode sheet was prepared using a roller.

The electrical conductivities and tensile strengths of the electrode sheets obtained in Examples 1 to 4 and Comparative Example 1 were measured. Results are shown in Table 1. The electrical conductivity and the tensile strength were measured according to the following methods.

(1) Measurement of Electrical Conductivity

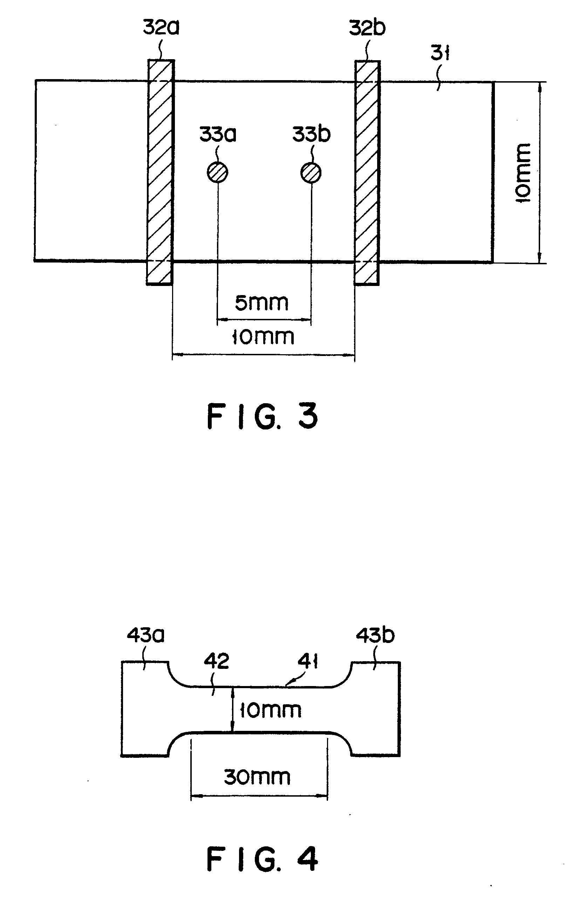

Each electrode sheet prepared as described above was cut into samples each having a size of 10 mm x 30 mm. As shown in Fig. 3, a pair of sheet-like current terminals 32a and 32b were brought into contact with the surface of test sample 31 and were spaced apart from each other by 10 mm. A pair of needle-like voltage terminals 33a and 33b were brought into contact with the surface of a portion of test sample 31 between terminals 32a and 32b and were spaced apart from each other by 5 mm. A voltage across terminals 33a and 33b was measured when a 1-kHz AC current was supplied across terminals 32a and 32b. In this manner, a four-terminal method was employed to measure the electrical conductivity.

(2) Measurement of Tensile Strength

Each electrode sheet prepared as described above was cut to obtain test sample 41 as shown in Fig. 4. The test sample 41 had central constricted portion 42 having a width of 10 mm and a length of 30 mm and wide portions 43a and 43b at its sides. Wide portions 43a and 43b were clamped by jig and were pulled, thereby measuring the tensile strength. It should be noted that a rheometer available from Fudo Kogyo K.K. was used in measurement.

Table 1

| | Hydrogen Absorption Alloy Powder (wt%) | Nickel Fiber (wt%) | PTFE Binder (wt%) | Electrical Conductivity $(10^{-3} \Omega^{-1})$ | Tensile Strength $(kg/cm^2)$ |
|---|---|---|---|---|---|
| Example 1 | 86.0 | 10.0 | 4.0 | 1.3 | 4.5 |
| 2 | 90.0 | 6.0 | " | 1.1 | 4.2 |
| 3 | 94.0 | 2.0 | " | 1.0 | 3.8 |
| 4 | 95.5 | 0.5 | " | 0.8 | 3.5 |
| Comparative Example 1 | 96.0 | —— | " | 0.002 | 2.2 |

As is apparent from Table 1, the electrical conductivity and the tensile strengths of the electrode sheets of Examples 1 to 4 are higher than those of Comparative Example 1.

Example 5

The hydrogen absorption alloy electrode sheet prepared in Example 3 was cut into test samples each having a size of 30 mm x 40 mm to prepare a cathode electrode. A nickel electrode having an excessive capacity served as a counter electrode (anode). The cathode and anode were dipped in an 8N- potassium hydroxide aqueous solution (electrolytic solution) to prepare a sample cell.

Example 6

Following the same procedures as in Example 5, a sample cell was prepared except that the hydrogen electrode sheet prepared in Example 3 was cut into test samples each having a size of 30 mm x 40 mm to prepare an electrode and that the electrode was compressed on an electrical collector of a 40-mesh nickel net having a wire diameter of 0.15 $\mu$m at a pressure of 500 kg/cm$^2$.

Comparative Example 2

Following the same procedures as in Example 5, a sample cell was prepared except that the hydrogen electrode sheet prepared in Comparative Example 1 was used.

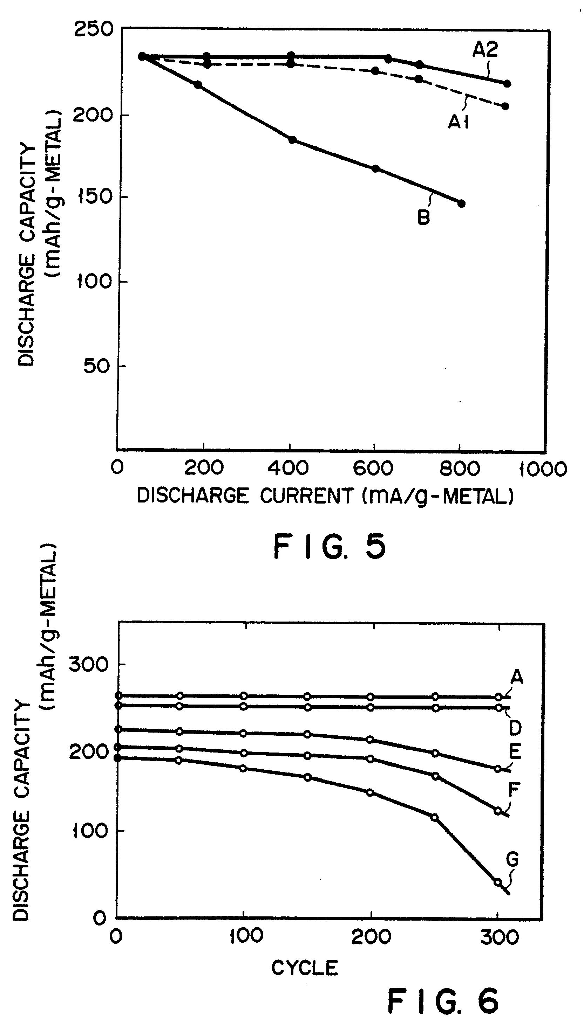

The sample cells obtained in Examples 5 and 6 and Comparative Example 2 were charged at a rate of 60 mA per gram of the hydrogen absorption alloy for 4.5 hours while the discharge current was varied to measure capacities for charging/discharging, thus obtaining a graph shown in Fig. 5. Characteristic curve A1 in Fig. 5 reprensents characteristics of the sample cell of Example 5, characteristic curve A2 represents characteristics of the sample cell of Example 6, and characteristic curve B represents characteristics of the sample cell of Comparative Example 2.

As is apparent from Fig. 5, the electrodes of Examples 5 and 6 have better discharging characteristics than that in Comparative Example 2. This indicates an increase in cell capacity and extraction of a large current.

Examples 7 - 13

Various hydrogen absorption alloy powders activated in hydrogen and passed through a 200-mesh sieve, metal fibers having a diameter of about 10 $\mu$m and a length of about 10 mm, and a polytetrafluoroethylene (PTFE) powder were mixed at a ratio shown in Table 2 and were kneaded, and six electrode sheets each having a thickness of 0.5 mm were prepared using a roller.

Following the same procedures as in Example 1, the electrical conductivities and the tensile strengths of the electrode sheets of Examples 7 to 13 were measured. Results are summarized in Table 2. Hydrogen absorption alloy electrode sheets consisting of various hydrogen absorption alloys and the PTFE binder are listed as Comparative Examples 3 to 6 in Table 2.

Table 2

| | Hydrogen Absorption Alloy Powder | | Metal Fiber | | PTFE Binder (wt%) | Electrical Conductivity ($10^{-3}$ $\Omega^{-1}$) | Tensile Strength (kg/cm$^2$) |
|---|---|---|---|---|---|---|---|
| | Composition | (wt%) | Composition | (wt%) | | | |
| Example 7 | LaNi$_{4.7}$Al$_{0.3}$ | 94.0 | SUS 316 L | 2.0 | 4.0 | 0.9 | 3.9 |
| 8 | " | 95.0 | Cu | 1.0 | " | 1.1 | 3.7 |
| 9 | MmNi$_5$ | 94.0 | Ni | 2.0 | " | 1.0 | 3.8 |
| 10 | LaCo$_5$ | 94.0 | Ni | 2.0 | " | 0.9 | 3.7 |
| 11 | " | 95.5 | Co | 0.5 | " | 0.7 | 3.3 |
| 12 | TiFe | 92.0 | SUS 316 L | 4.0 | " | 1.0 | 4.4 |
| 13 | TiFe$_{0.8}$Mn$_{0.2}$ | 94.0 | SUS 316 L | 2.0 | " | 0.9 | 4.0 |
| Comparative Example 3 | MmNi$_5$ | 96.0 | | — | " | 0.002 | 2.3 |
| 4 | LaCo$_5$ | 96.0 | | — | " | 0.003 | 2.2 |
| 5 | TiFe | 96.0 | | — | " | 0.002 | 2.2 |
| 6 | TiFe$_{0.8}$Mn$_{0.2}$ | 96.0 | | — | " | 0.004 | 2.3 |

Examples 14 - 17

The hydrogen absorption alloy powder activated in hydrogen and passed through a 200-mesh sieve obtained in Example 1, a strand prepared by twisting 20 nickel fibers having a diameter of about 10 $\mu$m and

a length of about 10 mm by 250 to 300 times/m, and polytetrafluoroethylene (PTFE) powder were mixed at a ratio shown in Table 3 and were kneaded, and four hydrogen absorption alloy electrode sheets each having a thickness of 0.5 mm were prepared using a roller.

Following the same procedures as in Example 1, the electrical conductivities and the tensile strengths of the electrode sheets obtained in Examples 14 to 17 were measured. Results are summarized in Table 3. The electrical conductivity and the tensile strength of the hydrogen electrode sheet in Comparative Example 1 were also listed in Table 3.

Table 3

| | Hydrogen Absorption Alloy Powder (wt%) | Strand of Nickel Fibers (wt%) | PTFE Binder (wt%) | Electrical conductivity ($10^{-3}$ $\Omega^{-1}$) | Tensile Strength (kg/cm²) |
|---|---|---|---|---|---|
| Example 14 | 86.0 | 10.0 | 4.0 | 1.2 | 5.2 |
| 15 | 90.0 | 6.0 | " | 1.0 | 4.7 |
| 16 | 94.0 | 2.0 | " | 0.9 | 4.6 |
| 17 | 95.0 | 1.0 | " | 0.5 | 4.3 |
| Comparative Example 1 | 96.0 | — | " | 0.002 | 2.2 |

EP 0 266 162 B1

As is apparent from Table 3, the electrical conductivities and the tensile strengths of the hydrogen electrode sheets containing the metal fiber strands (in Examples 14 to 17) are higher than those of the hydrogen electrode sheet of Comparative Example 1.

Example 18

A 200-mesh passed $LaNi_{4.7}A\ell_{0.3}$ powder activated in hydrogen, carbon fibers having a diameter of 11.5 $\mu$m, a length of 3.0 mm and a content shown in Table 4, and 2 wt% of a polytetrafluoroethylene powder were uniformly mixed by a mixer, and at the same time polytetrafluoroethylene was converted into fibers. The resultant mixture was rolled by a roller to obtain sheets each having a predetermined thickness. Each sheet was compressed on one major surface of a nickel net at a pressure of 400 to 2,000 $kg/cm^2$ to prepare hydrogen absorption alloy electrodes each having a size of 10 mm x 10 mm.

Resistances of the sheets and tensile strengths of the resultant hydrogen absorption alloy electrode samples were measured in a manner mentioned before. Results are summarized in Table 4. Samples E and F contained acetylene black and nickel flake as conductive materials, respectively. Sample G did not contain the conductive material.

Table 4

| Sample | Conductive Material | | Resistance of Sheet ($\Omega$) | Tensile Strength of Sheet ($kg/cm^2$) |
| --- | --- | --- | --- | --- |
| | Type | Content (wt%) | | |
| A | Carbon Fiber | 0.5 | $2 \times 10^4$ | 1.0 |
| B | '' | 1.0 | $5 \times 10^2$ | 1.5 |
| C | '' | 2.0 | $2 \times 10^2$ | 2.0 |
| D | '' | 4.0 | $1.7 \times 10^2$ | 2.5 |
| E | Acetylene Black | 2.0 | $4 \times 10^2$ | 1.2 |
| F | Nickel Flake | 10.0 | $2 \times 10^5$ | 1.4 |
| G | - | - | $2 \times 10^6$ | 0.8 |

As is apparent from Table 4, the resistances of the sheets of samples A to D obtained in Example 18 can be decreased, as compared with conventional samples E and F, even if the content of the carbon fibers is reduced. In addition, the tensile strengths of samples A to D can be large.

Using samples A and D of Example 18 and conventional samples E, F and G, cells shown in Fig. 2 were prepared and their charging/discharging cycle characteristics were measured. A graph shown in Fig. 6 was obtained. In each cell, a sintered nickel electrode having a size 30 mm x 40 mm was used as an anode, and 8N-KOH was used as an electrolytic solution.

As is apparent from Fig. 6, a decrease in discharge capacity of the hydrogen absorption alloy electrodes of Example 18, which was caused by repeated charging/discharging, can be minimized as compared with the conventional hydrogen absorption alloy electrode. The hydrogen absorption alloy electrodes of Example 18 have a long service life. This is because the carbon fibers together with the binder constitute a three-dimensional structure of the hydrogen absorption alloy electrode, thereby improving binding force and contact between the hydrogen absorption alloy powder particles.

Example 19

Water was added to a mixture of $LaNi_{4.7}A\ell_{0.3}$ powder which was pulverized mechanically in an argon gas atmosphere and passed through a 300-mesh shieve, 1.0 wt% of carbon fibers having a length of 1.0 mm to 30 mm and a diameter changed in the range of 5.0 $\mu$m to 25 $\mu$m, 2.0 wt% of carboxymethyl

11

cellulose, and a polytetrafluoroethylene dispersion whose content became 1 % by weight in solid state, to obtain a paste. This paste was applied to a nickel net, and the mixture was subjected to evaporation of water in an inert gas at 60°C or vacuum. The dried material was rolled by a roller press to prepare a hydrogen absorption alloy electrode.

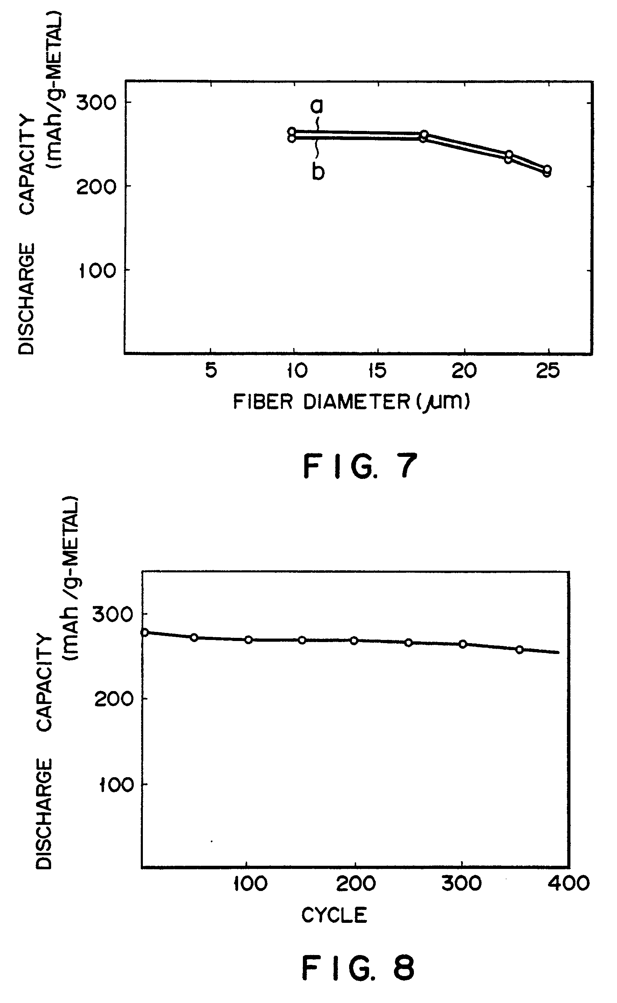

A cell as in Fig. 2 was prepared using the resultant hydrogen absorption alloy electrode, and discharge capacities as a function of diameter of the carbon fiber in the electrode were measured to obtain a graph shown in Fig. 7. Characteristic curve a in Fig. 7 represents characteristics of the hydrogen absorption alloy electrode containing at least two types of carbon fibers having a length falling within the range of 1.0 mm to 30 mm. Characteristic curve b represents characteristics of the hydrogen absorption alloy electrode containing carbon fibers having a length of 30 mm.

As is apparent from curves a and b in Fig. 7, the discharge capacities of the electrode containing carbon fibers having a diameter exceeding 20 $\mu$m are degraded. No considerable difference is found between the capacities of the electrode having carbon fibers having identical lengths and the electrode containing two or more carbon fibers having different lengths.

Example 20

A 200-mesh passed $LaNi_{4.7}A\ell_{0.3}$ powder activated in hydrogen, 0.5 wt% of conductive furnace black having an average particle size of 0.2 to 0.3 $\mu$m, 0.5 wt% of carbon fibers having a diameter of 11.5 $\mu$m and a length of 3.0 mm, and 4 wt% of a polytetrafluoroethylene powder were uniformly mixed by a mixer. At the same time, polytetrafluoroethylene was converted into fibers and together with the carbon fibers constituted a three-dimensional structure. The mixture was then rolled by a roller into a sheet having a predetermined thickness. The resultant sheet was compressed against one major surface of a 40-mesh nickel net having a diameter of 0.13 mm at a pressure of 1 ton/cm², thereby preparing a hydrogen absorption alloy electrode.

Following the same procedures as in Example 18, the resistance of the sheet and tensile strength of the resultant hydrogen absorption alloy electrode were measured. The resistance of the sheet was as high as $3.0 \times 10^2$ $\Omega$, and the tensile strength was as high as 1.7 kg/cm².

A cell as shown in Fig. 2 was prepared using the hydrogen absorption alloy electrode obtained in Example 20, and the charging/discharging repeated cycle characteristics of the cell were measured. Results are shown in a graph of Fig. 8. This cell was proved to have a large discharge capacity and a long service life. This is because the electrical conductivity was increase by the addition of furnace black and carbon fibers, and also because the carbon fibers in the electrode form a three-dimensional chain stereostructure which connects particles of hydrogen absorption alloy and furnace black each other.

Example 21

Hydrogen absorption alloy electrodes were prepared following the same procedures as in Example 20 except that the content of conductive furnace black was changed in the range of 0.5 to 4.0 wt% and the content of the carbon fibers was changed in the range of 0.5 to 4.0 wt%.

Following the same procedures as in Example 18, the resistances of the sheets and the discharge capacities of the resultant electrodes were measured. Results are summarized in Table 5.

Table 5

| Sample No. | Content of Furnace Black (wt%) | Content of Carbon Fiber (wt%) | Resistance ($\Omega$) | Discharge Capacity (mAh/g) |
|---|---|---|---|---|
| 1 | 0.5 | 0.5 | $3 \times 10^2$ | 274 |
| 2 | 0.5 | 1.0 | $2.8 \times 10^2$ | 276 |
| 3 | 1.0 | 1.0 | $2.5 \times 10^2$ | 267 |
| 4 | 1.0 | 2.0 | $2.5 \times 10^2$ | 265 |
| 5 | 2.0 | 0.5 | $2.0 \times 10^2$ | 265 |
| 6 | 2.0 | 1.0 | $1.8 \times 10^2$ | 268 |
| 7 | 2.0 | 4.0 | $1.6 \times 10^2$ | 232 |
| 8 | 4.0 | 0.5 | $1.5 \times 10^2$ | 243 |
| 9 | 4.0 | 1.0 | $1.5 \times 10^2$ | 245 |

As shown in Table 5, both the content of furnace black and the content of carbon fibers are related with the results. Practical cells are expected to have a discharge capacity of 250 mAh/g or more. In this case, the content of furnace black preferably falls within the range of 0.5 to 2.0 wt%, the content of carbon fibers preferably falls within the range of 0.5 to 2.0 wt%, and a total content of furnace black and carbon fibers preferably falls within the range of 3.0 wt% or less.

Example 22

An electrode according to the present invention was prepared following the same procedures as in Example 18 except that $LmNi_{4.2}Co_{0.2}Mn_{0.3}A\ell_{0.3}$ (Lm: misch metal enriched with La) was used as a hydrogen absorption alloy. The contents of a polytetrafluoroethylene powder and carbon fibers (diameter: 5 $\mu$m; length: 3.0 mm) were 4 wt% and 2 wt%, respectively. An electrode was prepared as Comparative Example A following the same procedures as in Example 22 except that 0.5 wt% of carbon powder (average particle size: 0.3 $\mu$m) was used instead of carbon fibers. In addition, an electrode was prepared as Comparative Example B following the same procedures as in Example 22 except that the carbon fibers are not mixed.

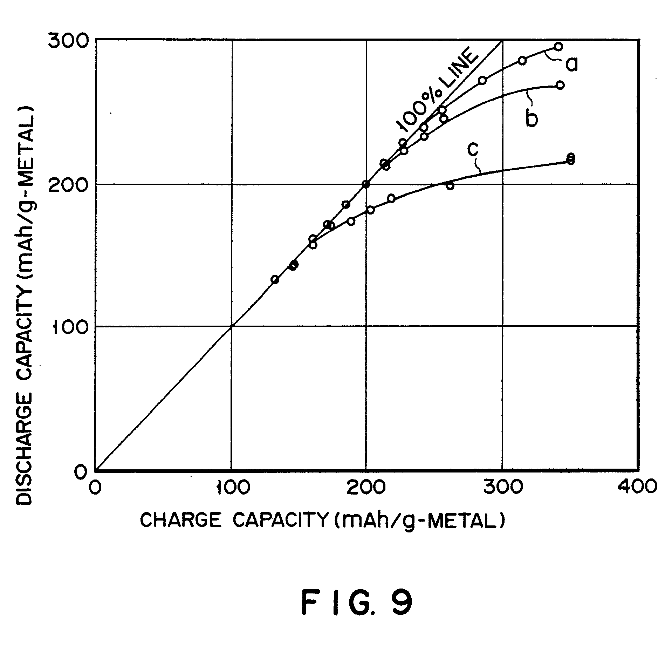

Hydrogen secondary cells shown in Fig. 2 were prepared using the above electrodes, and the relationship between the charge and discharge capacities was measured. Results are shown in Fig. 9, in which curve a relates to the present invention, curve b relates to Comparative Example A, and curve c relates to Comparative Example B. As seen from Fig. 9, the hydrogen absorption alloy electrode according to the present invention provides a discharge capacity substantially proportional to the charge capacity, and has a high value of discharge capacity at an efficiency of 100 %.

According to the present invention as described above, there is provided a hydrogen absorption electrode having a high electrical conductivity, high rate (large current) charging/discharging characteristic, and a large electrical capacity, having high mechanical strength represented by the tensile strength, and good workability. By preparing a cell using such an electrode, the service life of the cell can be prolonged due to improved chemical, electrochemical, and physical stability.

**Claims**

1.  A hydrogen absorption electrode comprising:

a hydrogen absorption alloy powder (12) selected from the group comprising a La-Ni alloy, a Ca-Ni alloy, a Ti-Ni alloy, a La-Co alloy, a Ti-Cu alloy, a Ti-Fe alloy and a Ca-Cu alloy; alloys of misch metal with Ni or Co; and related alloys which contain other elements substituting a portion of the elements of the above alloys; particles of which powder are bound by polymeric binder (13) inert in an electrolytic solution; and

a fibrous conductive material (11) contacting with the particles of said hydrogen absorption alloy powder so as to bridge the particles.

2. An electrode according to claim 1, characterized in that the fibrous conductive material has a content of 0.5 to 10% by weight with respect to a total weight of the electrode.

3. An electrode according to claim 1 or 2, characterized in that the binder has a content of 0.5 to 10% by weight with respect to a total weight of the electrode.

4. An electrode according to claim 1, 2 or 3, characterized in that the hydrogen absorption alloy powder has a particle size of about 0.1 to about 50 $\mu$m.

5. An electrode according to claim 1, 2, 3 or 4 characterized in that the fibrous conductive material has a length about 10 times or more its diameter.

6. An electrode according to any preceding claim, characterized in that the fibrous conductive material comprises a metal fiber.

7. An electrode according to claim 6, characterized in that one of elements of the metal fiber is the same as one of elements of the hydrogen absorption alloy.

8. An electrode according to claim 6, characterized in that the fibrous conductive material comprises a plurality of types of metal fibers, at least one of which is the same as one of elements of the hydrogen absorption alloy.

9. An electrode according to claim 6, 7 or 8, characterized in that the metal fiber comprises a pure metal or an alloy having corrosion resistance in an alkaline solution.

10. An electrode according to claim 6, characterized in that the hydrogen absorption alloy powder contains nickel as an element thereof, and the metal fiber comprises nickel.

11. An electrode according to any of claims 6 to 10, characterized in that the metal fibers are stranded.

12. An electrode according to any of claims 6 to 11 characterized in that the metal fiber has a diameter of about 2 to 60 $\mu$m and a length of about 200 $\mu$m to about 6 cm.

13. An electrode according to any of claims 1 to 5 characterized in that the fibrous conductive material comprises a carbon fiber.

14. An electrode according to claim 13, characterized in that the carbon fiber has a content of 1.0 to 20.0 % by weight with respect to a total weight of the electrode.

15. An electrode according to claim 13 or 14, characterized in that the carbon fiber has a diameter of not more than 20 $\mu$m and a length of 1.0 to 30mm.

16. An electrode according to any preceding claim, further containing carbon black.

17. An electrode according to claim 16, characterized in that the carbon black has a content of 0.5 to 2.0 % by weight with respect to a total weight of the electrode.

18. A hydrogen cell comprising a sealed vessel, an electrolytic solution contained in the sealed vessel, a cathode, an anode, and a separator, separating the cathode and anode, said cathode, anode and separator being wetted by the electrolytic solution, wherein the cathode is constituted by the electrode according to any of claims 1 to 17.

EP 0 266 162 B1

**Revendications**

1. Une électrode à absorption d'hydrogène comprenant :

une poudre d'alliage à absorption d'hydrogène (12) choisie dans le groupe comprenant un alliage de La-Ni, un alliage de Ca-Ni, un alliage de Ti-Ni, un alliage de La-Co, un alliage de Ti-Cu, un alliage de Ti-Fe et un alliage de Ca-Cu; des alliages de mischmétal avec Ni ou Co; et des alliages apparentés qui contiennent d'autres éléments se substituant à une portion des éléments des alliages mentionnés ci-dessus; les particules de cette poudre sont liées par un liant polymère (13) inerte dans une solution électrolytique; et

un matériau conducteur fibreux (11) en contact avec les particules de ladite poudre d'alliage à absorption d'hydrogène pour ponter lesdites particules.

2. Une électrode selon la revendication 1, caractérisée en ce que la teneur en matériau conducteur fibreux est de 0,5 à 10 % en poids par rapport au poids total de l'électrode.

3. Une électrode selon la revendication 1 ou 2, caractérisée en ce que la teneur en liant est de 0,5 à 10% en poids par rapport au poids total de l'électrode.

4. Une électrode selon la revendication 1, 2 ou 3, caractérisée en ce la poudre d'alliage à absorption d'hydrogène a une taille de particules d'environ 0,1 à environ 50 $\mu$m.

5. Une électrode selon la revendication 1, 2, 3 ou 4, caractérisée en ce que le matériau conducteur fibreux a une longueur d'environ 10 fois ou plus son diamètre.

6. Une électrode selon l'une quelconque des revendications précédentes, caractérisée en ce que le matériau conducteur fibreux comprend une fibre métallique.

7. Une électrode selon la revendication 6, caractérisée en ce que l'un des éléments de la fibre métallique est le même que l'un des éléments de l'alliage à absorption d'hydrogène.

8. Une électrode selon la revendication 6, caractérisée en ce que le matériau conducteur fibreux comprend une pluralité de types de fibres métalliques, dont l'un au moins est le même que l'un des éléments de l'alliage à absorption d'hydrogène.

9. Une électrode selon la revendication 6, 7 ou 8, caractérisée en ce que la fibre métallique comprend un métal pur ou un alliage ayant une résistance à la corrosion dans une solution alcaline.

10. Une électrode selon la revendication 6, caractérisée en ce que la poudre d'alliage à absorption d'hydrogène contient du nickel comme un de ses éléments, et la fibre métallique comprend du nickel.

11. Une électrode selon l'une quelconque des revendications 6 à 10, caractérisée en ce que les fibres métalliques sont toronnées.

12. Une électrode selon l'une quelconque des revendications 6 à 11, caractérisée en ce que la fibre métallique a un diamètre d'environ 2 à 60 $\mu$m et une longueur d'environ 200 $\mu$m à environ 6 cm.

13. Une électrode selon l'une quelconque des revendications 1 à 5, caractérisée en ce que le matériau conducteur fibreux comprend une fibre de carbone.

14. Une électrode selon la revendication 13, caractérisée en ce que la teneur en fibres de carbone est de 1,0 à 20,0% en poids par rapport au poids total de l'électrode.

15. Une électrode selon la revendication 13 ou 14, caractérisée en ce que la fibre de carbone a un diamètre ne dépassant pas 20 $\mu$m et une longueur de 1,0 à 30 mm.

16. Une électrode selon l'une quelconque des revendications précédentes, contenant en outre du noir de carbone.

15

17. Une électrode selon la revendication 16, caractérisée en ce que la teneur en noir de carbone est de 0,5 à 2,0 % en poids par rapport au poids total de l'électrode.

18. Une pile à hydrogène comprenant un récipient scellé, une solution électrolytique contenue dans le récipient scellé, une cathode, une anode et un séparateur séparant la cathode et l'anode, ladite cathode, ladite anode et ledit séparateur étant mouillés par la solution électrolytique, selon laquelle la cathode est constituée par l'électrode selon l'une quelconque des revendications 1 à 17.

**Ansprüche**

1. Wasserstoffabsorptionselektrode, umfassend
eine wasserstoffabsorbierende pulverförmige Legierung (12) aus der Gruppe La-Ni-, Ca-Ni-, Ti-Ni-, La-Co-, Ti-Cu-, Ti-Fe- und Ca-Cu-Legierungen, Legierungen von Mischmetall mit Ni oder Co und verwandte Legierungen, die sonstige Elemente als Ersatz eines Teils der Elemente der genannten Legierungen enthalten, wobei die Pulverteilchen durch ein in einer Elektrolytlösung inertes polymeres Bindemittel (13) gebunden sind, und
ein die Teilchen der wasserstoffabsorbierenden pulverförmigen Legierung zur Brückenbildung zwischen ihnen berührendes faserförmiges leitfähiges Material (11).

2. Elektrode nach Anspruch 1, dadurch gekennzeichnet, daß das faserförmige leitfähige Material 0,5 - 10 Gew.-% des Gesamtgewichts der Elektrode ausmacht.

3. Elektrode nach Anspruch 1 oder 2, dadurch gekennzeichnet, daß das Bindemittel 0,5 - 10 Gew.-% des Gesamtgewichts der Elektrode ausmacht.

4. Elektrode nach Anspruch 1, 2 oder 3, dadurch gekennzeichnet, daß die wasserstoffabsorbierende pulverförmige Legierung eine Teilchengröße von etwa 0,1 bis etwa 50 $\mu$m aufweist.

5. Elektrode nach Anspruch 1, 2, 3 oder 4, dadurch gekennzeichnet, daß das faserförmige leitfähige Material eine Länge entsprechend dem 10-fachen oder mehr seines Durchmessers aufweist.

6. Elektrode nach einem der vorhergehenden Ansprüche, dadurch gekennzeichnet, daß das faserförmige leitfähige Material eine Metallfaser umfaßt.

7. Elektrode nach Anspruch 6, dadurch gekennzeichnet, daß eines der Elemente der Metallfaser dasselbe ist wie eines der Elemente der wasserstoffabsorbierenden Legierung.

8. Elektrode nach Anspruch 6, dadurch gekennzeichnet, daß das faserförmige leitfähige Material eine Mehrzahl von Metallfaserarten umfaßt, wobei mindestens eine dieselbe ist wie eines der Elemente der wasserstoffabsorbierenden Legierung.

9. Elektrode nach Anspruch 6, 7 oder 8, dadurch gekennzeichnet, daß die Metallfaser ein reines Metall oder eine Legierung mit Korrosionsbeständigkeit in alkalischer Lösung umfaßt.

10. Elektrode nach Anspruch 6, dadurch gekennzeichnet, daß die wasserstoffabsorbierende pulverförmige Legierung Nickel als eines ihrer Elemente enthält und die Metallfaser Nickel umfaßt.

11. Elektrode nach einem der Ansprüche 6 bis 10, dadurch gekennzeichnet, daß die Metallfasern strangförmig sind.

12. Elektrode nach einem der Ansprüche 6 bis 11, dadurch gekennzeichnet, daß die Metallfaser einen Durchmesser von etwa 2 - 60 $\mu$m und eine Länge von etwa 200 $\mu$m bis etwa 6 cm aufweist.

13. Elektrode nach einem der Ansprüche 1 bis 5, dadurch gekennzeichnet, daß das faserförmige leitfähige Material eine Kohlenstoffaser umfaßt.

14. Elektrode nach Anspruch 13, dadurch gekennzeichnet, daß die Kohlenstoffaser 1,0 - 20,0 Gew.-% des Gesamtgewichts der Elektrode ausmacht.

15. Elektrode nach Anspruch 13 oder 14, dadurch gekennzeichnet, daß die Kohlenstoffaser einen Durchmesser von nicht mehr als 20 $\mu$m und eine Länge von 1,0 - 30 mm aufweist.

16. Elektrode nach einem der vorhergehenden Ansprüche, die zusätzlich Ruß enthält.

17. Elektrode nach Anspruch 16, dadurch gekennzeichnet, daß der Ruß 0,5 - 2,0 Gew.-% des Gesamtgewichts der Elektrode ausmacht.

18. Wasserstoffzelle, umfassend ein abgedichtetes Gefäß, eine in dem abgedichteten Gefäß befindliche Elektrolytlösung, eine Kathode, eine Anode und ein die Kathode und Anode trennendes Element, wobei die Kathode, die Anode und das Trennelement durch die Elektrolytlösung benetzt werden und die Kathode aus einer Elektrode nach einem der Ansprüche 1 bis 17 besteht.

F I G. 1

F I G. 2

F I G. 3

F I G. 4

F I G. 5

F I G. 6

20

FIG. 7

FIG. 8

FIG. 9